# EUROPÄISCHE PATENTSCHRIFT

(11) **EP 2 276 619 B1**
(45) Veröffentlichungstag und Bekanntmachung des Hinweises auf die Patenterteilung: **31.08.2011**
(21) Anmeldenummer: 09741993.1
(22) Anmeldetag: 24.04.2009
(51) Int. Cl.: B29C 45/77

(54) **VERFAHREN UND VORRICHTUNG ZUR HERSTELLUNG EINES BESCHICHTETEN BAUTEILS**
METHOD AND DEVICE FOR PRODUCING A COATED COMPONENT
PROCÉDÉ ET DISPOSITIF DE FABRICATION D'UNE PIÈCE MUNIE D'UN REVÊTEMENT

(30) Priorität: 07.05.2008 DE 102008022596
(43) Veröffentlichungstag der Anmeldung: 26.01.2011
(73) Patentinhaber: KraussMaffei Technologies GmbH, 80997 München (DE)
(72) Erfinder: RENKL, Josef, 85229 Markt Indersdorf (DE); FREHSDORF, Wolfgang, 80802 München (DE)
(74) Vertreter: Wilhelm, Ludwig
(86) Internationale Anmeldenummer: PCT/EP2009/054957
(87) Internationale Veröffentlichungsnummer: WO 2009/135775

(56) Entgegenhaltungen:
- WO-A-03/059594
- WO-A-2005/000566
- WO-A-2008/100146
- DE-B3-102006 048 252
- GB-A- 2 411 618
- JP-A- 63 095 636
- US-A1- 2002 121 719
- US-A1- 2002 155 186
- US-A1- 2005 017 392
- US-B1- 7 158 854

## Beschreibung

Die vorliegende Erfindung betrifft ein Verfahren und eine Vorrichtung zum Herstellen eines beschichteten Bauteils gemäß den Oberbegriffen der Ansprüche 1 bzw. 6.

Seit einiger Zeit ist es bekannt, Polyurethanhäute in geschlossenen Formwerkzeugen durch Fluten herzustellen. Insbesondere ist es bekannt, Trägerbauteile in geschlossenen Formen durch Überflutungsverfahren mit einem Oberflächenmaterial zu beschichten. Zur Unterstützung dieses Flutungs- oder Beschichtungsvorgangs ist es überdies bekannt, in dem Flutungsspalt zwischen einem Trägerbauteil und einer Kavitätswand einen Unterdruck zu erzeugen. Diesbezüglich wird auf die Dokumente US 4207049, JP 03164218, DE 24 61 925 und US 4,447,328 sowie US 2002/155 186 hingewiesen.

Problematisch bei den darin beschriebenen Verfahren und Vorrichtungen ist jedoch, dass sich die Füllgeschwindigkeit während des Einbringens des Füllmaterials in erheblichem Bereich verändern kann, was zu nachteiligen Effekten führt. So ist es beispielsweise möglich, dass bei einem anfänglich sehr geringen Druck die Fließgeschwindigkeit zu hoch ist und das Füllmaterial insbesondere an der Fließfront aufschäumt, wodurch es zu Blasenbildung kommt. Diese Blasenbildung mindert die Qualität der Beschichtungs-Schicht und kann sogar dazu führen, dass das Bauteils als Ausschuss anzusehen ist. Insbesondere beim Vorgeben eines nicht veränderbaren Vakuums, beispielsweise durch einen Aufziehprozess, wird sich das Vakuum während der Befüllung abschwächen, so dass im Endstadium des Befüllungsvorganges evtl. überhaupt kein Unterdruck mehr vorliegt, der den Befüllungsvorgang unterstützen kann. In diesem Fall muss das Befüllungsmaterial mit einem entsprechenden Überdruck während der letzten Prozessphase eingebracht werden.

In der DE 22 34 723 ist eine Vorrichtung zum Umgießen von Einlegeteilen unter reduziertem Druck beschrieben, der mittels einer Vakuumpumpe hergestellt wird. Dabei ist eine Sensoreinrichtung zur Ermittlung zweier, jeweils einstellbarer Druckwerte vorgesehen. Wird ein erster Unterdruckwert erreicht, so wird der Füllvorgang für das Formwerkzeug gestartet. Für den Fall, dass im Verlauf des Füllvorganges der zweite Unterdruckwert unterschritten wird, wird die Vakuumpumpe gestoppt. Meldet ein Sensor die vollständige Füllung der Form, wird die Materialzufuhr beendet und das Druckniveau in der Form auf den Umgebungsdruck gebracht. Wird bei diesem System der zweite Unterdruckwert nicht erreicht, ist das Druckniveau nicht bekannt. Insbesondere kann dann nicht auf einen vorgegebenen Solldruckverlauf geregelt werden.

Aufgabe der vorliegenden Erfindung ist es, ein Verfahren und eine Vorrichtung zur Herstellung eines beschichteten Bauteils in gattungsgemäßer Weise anzugeben, bei der die Qualität der Schicht, insbesondere der Oberflächenbeschichtung möglichst optimal ist.

Diese Aufgabe wird durch die in den Ansprüchen 1 und 6 angegebenen Merkmale verfahrens- bzw. vorrichtungsmäßig gelöst.

Demgemäß besteht ein Gedanke der Erfindung darin, den Unterdruck entsprechend einer Vorgabe zu steuern und zu regeln. So werden Sollwerte für den Verfahrensablauf hinterlegt werden, die möglichst nachgefahren werden.

Mit der Steuerung oder Regelung des Unterdruckes wird die Füllgeschwindigkeit des Systems beeinflusst, so dass bei entsprechender Anpassung des Unterdruckes über den Füllungsvorgang hinweg ein gewünschter Füllgeschwindigkeitsverlauf erreicht werden kann. So kann das Vakuum beispielsweise in dem Bereich zwischen 0 und 700 mbar je nach Vorgabe variiert werden.

Auf den Unterdruck kann beispielsweise in der Einrichtung zur Erzeugung des Unterdruckes (Unterdruck-Einrichtung, z.B. Vakuumpumpe) geschlossen werden. Weiterhin kann der Unterdruck aber auch im Flutungsspalt selbst - beispielsweise durch einen Drucksensor - ermittelt werden. Alternativ oder zusätzlich ist es auch möglich, die Füllgeschwindigkeit des Flutungsmaterials im Flutungsspalt zu ermitteln. Auf Basis dieser beiden Daten können alternativ oder zusätzlich der Unterdruck nachgeregelt werden.

Zum Zweck der Regelung oder Steuerung ist eine entsprechende Vorrichtung (z.B. Maschinensteuerung) vorzusehen, welche die Unterdruck-Einrichtung (z.B. Vakuumpumpe) entsprechend ansteuert. Natürlich kann nicht nur unmittelbar der Unterdruck entsprechend einem vorgegebenen Verlauf gesteuert werden. Der Unterdruck kann auch so variiert werden, dass ein vorgegebener Flutungsgeschwindigkeitsverlauf erreicht wird. In diesem Fall wird also auf den Flutungsgeschwindigkeitsverlauf gesteuert. So könnte der Unterdruck so geregelt werden, dass die Flutungsgeschwindigkeit während des gesamten Füllvorganges im Wesentlichen gleich bleibt.

Als Vorrichtung zur Erzeugung des Unterdruckes kann beispielsweise eine Vakuumpumpe vorgesehen sein, die über Leitungen und Kanäle mit dem Flutungsspalt verbunden oder verbindbar ist. Zur Vermeidung zusätzlicher Öffnungen im Formwerkzeug ist es auch möglich, das Vakuum über den Mischkopf selbst herzustellen. Dazu kann beim Mischkopf die Bohrung des Reinigungskolbens verwendet werden. Bei zurückgezogenem Reinigungskolben ist so eine Verbindung mit der Kavität des Formwerkzeugs gegeben, wobei in diesem Fall die Vakuumpumpe mit dieser Bohrung verbunden oder verbindbar ist.

Eine Ausführungsform der vorliegenden Erfindung wird nachfolgend und mit Bezug auf die einzige beigefügte Zeichnung näher erläutert.

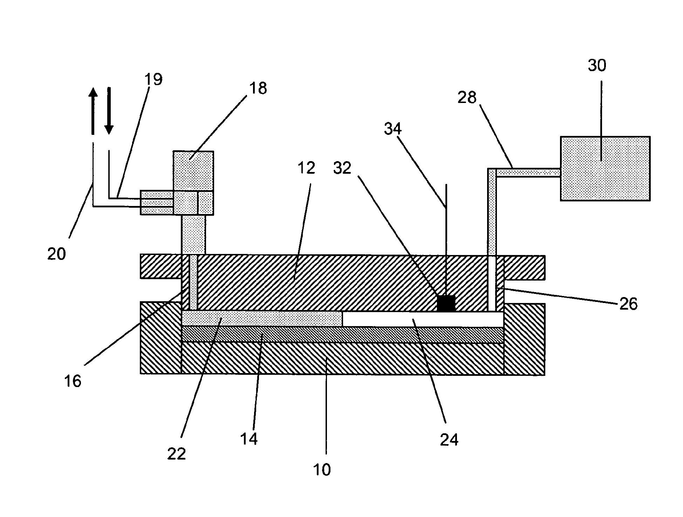

Die Zeichnung zeigt dabei in recht schematischer Weise eine erfindungsgemäße Vorrichtung, mit der das erfindungsgemäße Verfahren ausgeführt werden kann.

Insbesondere ist ein Formwerkzeug mit einem Formwerkzeugunterteil 10 und einem Formwerkzeugoberteil 12 schematisch dargestellt, wobei das Formwerkzeugoberteil 12 auf und zu bewegt werden kann. Wie in der Figur dargestellt ist, kann das Formwerkzeugoberteil 12 nach Art eines Tauchkantenwerkzeugs in die Ausnehmung des Formwerkzeugunterteils 10 eintauchen. So kann in einer Kavität erster Größe ein Trägerbauteil 14 erzeugt werden, beispielsweise durch einen Spritzgießvorgang, wie dies an sich bekannt ist.

Nach Aushärten des Materials, beispielsweise des Thermoplastmaterials für das Trägerbauteil 14, wird das Formoberteil 12 nach oben verfahren - also etwas aufgefahren - , wodurch sich zwischen dem Trägerbauteil 14 und der Kavitätswand des Formoberteils 12 ein gegenüber der Außenumgebung weiter abgeschlossener Flutungsspalt 24 ergibt.

In diesem Flutungsspalt 24 kann mittels eines Mischkopfes 18 ein Flutungsmaterial, beispielsweise ein Polyurethan-Material eingebracht werden. Dazu ist der Mischkopf 18 über einen Beschickungskanal 16 mit dem Flutungsspalt 24 verbunden. Der Mischkopf 18 erhält seine reaktiven Komponenten (z.B. Isocyanat und Polyol) über eine Komponentenzufuhr 19 und kann auch im sogenannten Rezirkulationsbetrieb über die Rückführleitung 20 betrieben werden. Diese Technologie ist im Stand der Technik allgemein bekannt und braucht vorliegend nicht näher erläutert zu werden.

In der Figur dargestellt ist ein Entlüftungskanal 26, an dem eine Entlüftungsleitung 28 angeschlossen ist, die zu einer Vakuumvorrichtung 30 führt. Diese Vakuumvorrichtung wird von einer nicht näher dargestellten Steuer- und Kontrollvorrichtung in regelbarer Weise beaufschlagt. Damit kann der Betrieb der Vakuumvorrichtung (beispielsweise eine Vakuumdruckpumpe) in gewünschter Weise durch entsprechende Beaufschlagung eingestellt werden. Mit der Vakuumeinrichtung 30 kann über die Entlüftungsleitung 28 und den Entlüftungskanal 26 im Flutungsspalt definiertes Vakuum erzeugt werden.

In der vorliegenden Darstellung ist der Flutungsspalt mit dem Flutungsmaterial 22 bereits zur Hälfte gefüllt. Die zweite Hälfte des Flutungsspaltes 24 ist noch frei und mit Unterdruck beaufschlagt. Dieser Unterdruck führt dazu, dass das Flutungsmaterial 22 weiter in definierter Weise den Flutungsspalt 24 eingezogen wird und sich gleichmäßig ausbreitet. Unterstützend kann auch noch der Mischkopf 18 das Flutungsmaterial 22 mit einem bestimmten Druck fördern. Die Füllgeschwindigkeit, insbesondere der Verlauf der Fließfront, hängt nun signifikant von dem angelegten Unterdruck ab.

Vorliegend wird der Unterdruck so eingestellt, dass er in jedem Befüllungszustand des Flutungsspaltes 24 in etwa gleich ist. Dies führt dazu, dass sich die Fließfront mit einer vorgegebenen Fließgeschwindigkeit ausbreitet, wobei es zu keinen negativen Lufteinschlüssen im Bereich der Fließfront kommt.

Alternativ kann der Unterdruck während des Befüllens auch gesenkt oder erhöht werden. Auch Kombinationen davon sind möglich. Überdies ist es auch möglich, die Druckregelung auf die Geometrie des Flutungsspaltes abzustellen. Vorliegend ist ein gleichmäßiger Flutungsspalt dargestellt. Es gibt jedoch auch Anwendungen, bei denen die Dicke des Flutungsspaltes örtlich variiert. Bei einer solchen Ausgestaltung kann der Unterdruck in Abhängigkeit von der Position der Fließfront im Werkzeug eingestellt werden, also beispielsweise der Unterdruck abgesenkt werden, wenn dickere Flutungsbereiche erreicht sind oder umgekehrt.

Insgesamt ermöglicht die vorliegende Erfindung eine Anpassung der Füllgeschwindigkeit über die Regelung des Vakuums, so dass keine Unregelmäßigkeiten beim Füllvorgang entstehen und die Beschichtungsoberfläche hochqualitativ ausgebildet wird.

### Bezugszeichenliste

- 10: Formunterteil
- 12: Formoberteil
- 14: Trägerstruktur
- 16: Beschickungskanal
- 18: Mischkopf
- 19: Komponentenzufuhr
- 20: Komponentenrückfuhr
- 22: Beschichtungsmaterial
- 24: Unterdruck
- 26: Entlüftungskanal
- 28: Entlüftungsleitung
- 30: Unterdruckpumpe
- 32: Drucksensor
- 34: Signalleitung

## Patentansprüche

1. Verfahren zur Herstellung eines beschichteten Bauteils mit den Schritten:
- Bilden eines Flutungsspaltes zwischen einem Trägerbauteil und einer Kavitätswand in einem geschlossenen Formwerkzeug,
- Erzeugen eines Unterdruckes in dem Flutungsspalt und
- Einfüllen eines Flutungsmaterials in den Flutungsspalt,
**dadurch gekennzeichnet, dass**
zur Einstellung des Flutungsgeschwindigkeitsverlaufes der Unterdruck im Flutungsspalt entsprechend einer Sollwert-Vorgabe kontinuierlich gesteuert oder geregelt wird, wobei vorgegebene Sollwerte über den Füllvorgang hinweg nachgefahren werden, wobei der Unterdruck derart geregelt wird, dass ein vorgegebener Flutungsgeschwindigkeitsverlauf erreicht wird.

2. Verfahren nach Anspruch 1
**dadurch gekennzeichnet,**
**dass** vor dem Bilden des Flutungsspalts ein Trägerbauteils in das Formwerkzeug eingebracht und der Flutungsspalt zwischen dem Trägerbauteil und dem Formwerkzeug ausgebildet wird.

3. Verfahren nach Anspruch 1 oder 2,
**dadurch gekennzeichnet,**
**dass** der Unterdruck im Flutungsspalt oder die Füllgeschwindigkeit des Flutungsmaterials im Flutungsspalt kontinuierlich ermittelt wird und auf Basis des kontinuierlich ermittelten Unterdruckes und/oder der ermittelten Flutungsgeschwindigkeit der Unterdruck kontinuierlich geregelt wird.

4. Verfahren nach Anspruch 1 oder 2,
**dadurch gekennzeichnet,**
**dass** die Steuerung oder Regelung des Unterdruckes in Kombination mit einem Prägeschritt des Formwerkzeugs erfolgt.

5. Verfahren nach einem der Ansprüche 1 bis 4,
**dadurch gekennzeichnet,**
**dass** der Unterdruck derart geregelt wird, dass die Flutungsgeschwindigkeit während des Füllvorganges im wesentlichen konstant bleibt.

6. Vorrichtung zur Durchführung des Verfahrens nach einem der vorhergehenden Ansprüche,
umfassend ein Formwerkzeug mit einem unteren (10) und oberen (12) Formwerkzeugteil zwischen denen eine Kavität ausbildbar ist,
einer Füllvorrichtung (18) zum Einfüllen eines Füllmaterials in einen Flutungsspalt (24) des Formwerkzeugs,
einer steuer- oder regelbaren Einrichtung (30) zur Erzeugung eines veränderlichen Unterdruckes, die mit dem Flutungsspalt (24) verbunden oder verbindbar ist, wobei,
eine Steuervorrichtung vorgesehen und mit der steuer- und regelbaren Unterdruck-Einrichtung (30) steuerungstechnisch verbunden ist, die Unterdruck-Einrichtung (30) entsprechend den Vorgaben der Steuervorrichtung einen Unterdruck mit einem gewünschten Druckverlauf erzeugt,
**dadurch gekennzeichnet,**
**dass** Sensoren zur kontinuierlichen Erfassung des Unterdruckes oder der Flutungsgeschwindigkeit vorgesehen sind und die Steuervorrichtung zum kontinuierlichen Vergleich mit vorgegebenen Sollwerten und zur Regelung des Unterdruckes im Flutungsspalt auf ein vorgegebener Flutungsgeschwindigkeitsverlauf ausgebildet ist.

7. Vorrichtung nach Anspruch 6,
**dadurch gekennzeichnet,**
**dass** das Formwerkzeug (10, 12) ausgebildet ist, um den Flutungsspalt (24) zwischen einem in der Kavität aufgenommenen Trägerbauteil (12) und einer Kavitätswand auszubilden.

8. Vorrichtung nach Anspruch 6 oder 7,
**dadurch gekennzeichnet,**
**dass** die Füllvorrichtung (18) ein Mischkopf für ein Polyurethan-System ist.

9. Vorrichtung nach einem der Ansprüche 6 bis 8,
**dadurch gekennzeichnet,**
**dass** in der Unterdruck-Einrichtung (30) ein Mittel zur Ermittlung des Unterdruckes vorgesehen ist.

10. Vorrichtung nach einem der Ansprüche 6 bis 9,
**dadurch gekennzeichnet,**
**dass** ein Sensor (32) im Bereich des Füllspaltes (24) vorgesehen ist, mit dem entweder der Unterdruck im Füllspalt (24) oder die Fließgeschwindigkeit des Füllmateriales (22) ermittelbar ist.

## Claims

1. A method for the production of a coated component with the steps:
- forming a flooding gap between a support component and a cavity wall in a closed moulding tool,
- producing an underpressure in the flooding gap and
- filling a flooding material into the flooding gap,
**characterized in that**
to set the flooding rate profile, the underpressure in the flooding gap is controlled or regulated continuously in accordance with a predefined desired value, wherein predefined desired values are followed over the filling process, wherein the underpressure is regulated such that a predefined flooding rate profile is achieved.

2. The method according to Claim 1,
**characterized in that**
before the formation of the flooding gap, a support component is introduced into the moulding tool and the flooding gap is formed between the support component and the moulding tool.

3. The method according to Claim 1 or 2,
**characterized in that**
the underpressure in the flooding gap or the filling rate of the flooding material in the flooding gap is continuously determined and on the basis of the continuously determined underpressure and/or of the determined flooding rate, the underpressure is continuously regulated.

4. The method according to Claim 1 or 2,
**characterized in that**
the control or regulation of the underpressure takes place in combination with a stamping step of the moulding tool.

5. The method according to one of Claims 1 to 4,
**characterized in that**
the underpressure is regulated such that the flooding rate remains substantially constant during the filling process.

6. A device for carrying out the method according to one of the preceding claims,
comprising a moulding tool with a lower (10) and upper (12) moulding part, between which a cavity is able to be formed,
a filling device (18) for filling a filling material into a flooding gap (24) of the moulding tool,
a controllable or adjustable arrangement (30) for the production of a changeable underpressure, which is connected or able to be connected with the flooding gap (24),
wherein
a control device is provided and is connected with regard to technical control with the controllable and adjustable underpressure arrangement (30), the underpressure arrangement (30) produces an underpressure with a desired pressure profile in accordance with the predefined values of the control device,
**characterized in that**
sensors are provided for the continuous detection of the underpressure or of the flooding rate, and the control device is constructed for continuous comparison with predefined desired values and for regulating the underpressure in the flooding gap to a predefined flooding rate profile.

7. The device according to Claim 6,
**characterized in that**
the moulding tool (10, 12) is constructed in order to form the flooding gap (24) between a support component (12) received in the cavity, and a cavity wall.

8. The device according to Claim 6 or 7,
**characterized in that**
the filling device (18) is a mixing head for a polyurethane system.

9. The device according to one of Claims 6 to 8,
**characterized in that**
in the underpressure arrangement (30) a means is provided for determining the underpressure.

10. The device according to one of Claims 6 to 9,
**characterized in that**
a sensor (32) is provided in the region of the filling gap (24), by which either the underpressure in the filling gap (24) or the flow rate of the filling material (22) is able to be determined.

## Revendications

1. Procédé de fabrication d'une pièce revêtue comprenant les étapes de :
- formation d'une fente de noyage entre une pièce porteuse et une paroi de cavité dans un moule fermé,
- production d'une dépression dans la fente de noyage et
- remplissage d'un matériau de noyage dans la fente de noyage,
**caractérisé en ce que**
pour régler le profil de vitesse de noyage, la dépression dans la fente de noyage est commandée ou régulée en continu selon une valeur de consigne, sachant que des valeurs de consigne prédéterminées sont suivies tout au long de la procédure de remplissage, sachant que la dépression est ainsi régulée qu'un profil de vitesse de noyage prédéterminé est atteint.

2. Procédé selon la revendication 1, **caractérisé en ce qu'**avant la formation de la fente de noyage, une pièce porteuse est insérée dans le moule et la fente de noyage est formée entre la pièce porteuse et le moule.

3. Procédé selon la revendication 1 ou 2, **caractérisé en ce que** la dépression dans la fente de noyage ou la vitesse de remplissage du matériau de noyage dans la fente de noyage est calculée en continue et la dépression est régulée en continu en se basant sur la dépression et/ou la vitesse de noyage calculée(s) en continu.

4. Procédé selon la revendication 1 ou 2, **caractérisé en ce que** la commande ou la régulation de la dépression s'effectue en combinaison avec une étape de frappe du moule.

5. Procédé selon l'une des revendications 1 à 4, **caractérisé en ce que** la dépression est ainsi régulée que la vitesse de noyage reste essentiellement constante pendant la procédure de remplissage.

6. Dispositif destiné à l'exécution du procédé selon l'une des revendications précédentes,
comprenant un moule avec une partie de moule inférieure (10) et supérieure (12) entre lesquelles une cavité peut être formée,
un dispositif de remplissage (18) pour remplir un matériau de remplissage dans une fente de noyage (24) du moule,
un dispositif pouvant être commandé ou régulé (30) pour produire une dépression variable qui est relié ou peut être relié à la fente de noyage (24), sachant
qu'un dispositif de commande est prévu et est relié en technique de commande au dispositif de dépression pouvant être commandé ou régulé (30), le dispositif de dépression (30) produit une dépression avec un profil de pression souhaité selon les consignes du dispositif de commande,
**caractérisé en ce que**
des capteurs sont prévus pour détecter en continu la dépression ou la vitesse de noyage et le dispositif de commande est formé pour la comparaison continue à des valeurs de consigne prédéterminées et pour la régulation de la dépression dans la fente de noyage à un profil de vitesse de noyage prédéterminé.

7. Dispositif selon la revendication 6, **caractérisé en ce que** l'outil (10, 12) est formé pour former la fente de noyage (24) entre une pièce porteuse (12) reçue dans la cavité et une paroi de la cavité.

8. Dispositif selon la revendication 6 ou 7, **caractérisé en ce que** le dispositif de remplissage (18) est une tête mélangeuse pour un système de polyuréthane.

9. Dispositif selon l'une des revendications 6 à 8, **caractérisé en ce qu'**un moyen pour calculer la dépression est prévu dans le dispositif de dépression (30).

10. Dispositif selon l'une des revendications 6 à 9, **caractérisé en ce qu'**un capteur (32) est prévu au niveau de la fente de remplissage (24) avec lequel, soit la dépression dans la fente de remplissage (24), soit la vitesse d'écoulement du matériau de remplissage (22), peut être calculée.
